# EUROPEAN PATENT SPECIFICATION

(11) **EP 1 867 854 B1**
(45) Date of publication and mention of the grant of the patent: **05.05.2010**
(21) Application number: 06731737.0
(22) Date of filing: 06.04.2006
(51) Int. Cl.: F02D 41/04, B01D 53/86, B01D 53/94, F01N 3/08, F02D 45/00, F01N 3/035, F01N 9/00, F01N 11/00

(54) **EXHAUST PURIFIER FOR INTERNAL COMBUSTION ENGINE**
ABGASREINIGER FÜR EINEN VERBRENNUNGSMOTOR
PURIFICATEUR DE GAZ D'ECHAPPEMENT POUR MOTEUR A COMBUSTION INTERNE

(30) Priority: 08.04.2005 JP 2005112847
(43) Date of publication of application: 19.12.2007
(73) Proprietor: Toyota Jidosha Kabushiki Kaisha, Toyota-shi, Aichi-ken, 471-8571 (JP); KABUSHIKI KAISHA TOYOTA JIDOSHOKKI, Kariya-shi, Aichi 448-8671 (JP)
(72) Inventor: KAMEDA, Kazuaki c/o KABUSHIKI KAISHA TOYOTA JIDOSHOKKI, Kariya-shi, Aichi-Ken, 448-8671 (JP)
(74) Representative: Kuhnen, Rainer-Andreas
(86) International application number: PCT/JP2006/307801
(87) International publication number: WO 2006/109850

(56) References cited:
- EP-A- 0 839 996
- EP-A- 1 094 206
- JP-A- 11 270 329
- JP-A- 2003 201 836
- JP-A- 2003 201 836
- JP-A- 2003 278 530
- JP-A- 2003 328 744
- JP-A- 2005 083 196
- JP-A- 2005 106 047
- JP-A- 2005 248 761
- JP-A- 2005 344 682

## Description

### Technical Field

The present invention relates to an exhaust gas purifying apparatus of an internal combustion engine, configured to provide an addition valve upstream of an exhaust gas purifying catalyst in an exhaust pipe for injection of a reducing agent, in addition to a fuel injection valve injecting fuel burnt in a combustion chamber of the internal combustion engine.

### Background Art

In an internal combustion engine operating by burning an air-fuel mixture at a high air-fuel ratio (lean atmosphere) in a wide operation region, such as a diesel engine, generally, an NOx catalyst attaining a function to purify a nitrogen oxide NOx in the exhaust gas is provided in an exhaust pipe thereof. As the NOx catalyst, for example, a catalyst carrying both an NOx absorbent capable of absorbing nitrogen oxide NOx in the presence of oxygen and a precious metal catalyst (precious metal) capable of oxidizing hydrocarbon HC on a honeycomb structure (carrier) made of porous ceramics is adopted.

The NOx catalyst has such a characteristic that it absorbs nitrogen oxide NOx in a state where oxygen concentration in the exhaust gas is high, while it emits nitrogen oxide NOx in a state where oxygen concentration in the exhaust gas is low. In addition, if hydrocarbon HC or carbon monoxide CO is present in the exhaust gas when nitrogen oxide NOx is emitted in the exhaust gas, the precious metal catalyst promotes oxidation reaction of hydrocarbon HC or carbon monoxide CO, so that oxidation-reduction reaction using nitrogen oxide NOx as an oxidation component and using hydrocarbon HC and carbon monoxide CO as a reduction component occurs therebetween. Namely, hydrocarbon HC and carbon monoxide CO are oxidized to carbon dioxide CO₂ or water H₂O, and nitrogen oxide NOx is reduced to nitrogen N₂.

When the NOx catalyst absorbs a prescribed limit amount of nitrogen oxide NOx, the NOx catalyst absorbs no more nitrogen oxide NOx even in a state where oxygen concentration in the exhaust gas is high. Accordingly, in the internal combustion engine provided with such an NOx catalyst in the exhaust pipe, an addition valve is provided upstream of the NOx catalyst in the exhaust pipe, separately from a fuel injection valve injecting fuel for combustion in the combustion chamber. By supplying a reducing agent such as light oil from the addition valve, nitrogen oxide NOx absorbed in the NOx catalyst is emitted and reduced and purified, so that NOx absorption capability of the NOx catalyst is recovered and the NOx absorption amount of the NOx catalyst does not reach the limit amount (see, for example, Japanese Patent Laying-Open No. 2003-120392).

If the temperature of the addition valve is raised, however, a component that is likely to volatilize (hereinafter, referred to as a volatile component) in the reducing agent that passes the addition valve evaporates, and a remaining deposit component is adhered and deposited in an injection hole of the addition valve and its surroundings. It may be likely that the deposits clog the injection hole and the reducing agent is not appropriately injected from the injection hole. In order to address this problem, it is proposed to increase the amount of addition of the reducing agent from the addition valve under the condition that the temperature of the addition valve is high, such as when the temperature of a coolant in the internal combustion engine is high and when the engine load is high.

When the amount of addition of the reducing agent is increased as above, the reducing agent at a low temperature passes the addition valve in a large amount, and the reducing agent removes the heat of the addition valve. The temperature at the tip end portion of the addition valve including the injection hole is lowered, and clogging of the injection hole is suppressed. On the other hand, if the increased reducing agent burns on the exhaust downstream side of the addition valve, the temperature of the NOx catalyst (catalyst bed temperature) is raised by the heat generated during combustion. If the NOx catalyst is excessively heated, the catalyst bed temperature may exceed the upper limit of a temperature range (allowable range) where the NOx catalyst appropriately functions.

From EP 0 839 996 A an exhaust gas purifying device for an engine is known which comprises an exhaust gas purifying catalyst with an electric heater arranged in the exhaust passage capable of temporarily adsorbing NOₓ in the inflowing exhaust gas therein. A NOₓ adsorbing capacity of the exhaust gas purifying catalyst becomes larger when a temperature of the exhaust gas purifying catalyst becomes higher. The heater is turned on and is turned off alternately and repeatedly to thereby increase and reduce the catalyst temperature. NOₓ in the inflowing exhaust gas is adsorbed in the exhaust gas purifying catalyst when the catalyst temperature falls, and the adsorbed NOₓ is desorbed from the exhaust gas purifying catalyst and reduced when the catalyst temperature increases. The catalyst temperature is controlled to increase to a first upper threshold temperature, at which the NOₓ adsorbing capacity of the exhaust gas purifying catalyst is substantially zero, and is controlled to fall to a first lower threshold temperature, at which the NOₓ adsorbing capacity of the exhaust gas purifying catalyst is substantially a maximum.

JP 2003-201836 A further discloses a fuel supply device for a catalyst for exhaust gas which suppresses the production of deposit around the jet hole of an injection nozzle. There, an electronic control device is provided which injects fuel into an exhaust port from the injection nozzle in order to secure the exhaust gas purifying action of the catalyst in the operating region in which the catalyst is blow its activating temperature. In the operating region in which the catalyst temperature is over the activation level, the control device executes the injection of fuel appropriately. With this fuel injection, the tip temperature of the injection nozzle lowers and production of deposit is suppressed.

### Disclosure of the Invention

The present invention was made in view of such situations, and an object of the present invention is to provide an exhaust gas purifying apparatus of an internal combustion engine capable of suppressing overheat of an exhaust gas purifying catalyst while suppressing clogging of an injection hole of an addition valve.

A configuration for achieving the object above and a function and effect thereof will be described in the following.

The present invention is directed to an exhaust gas purifying apparatus of an internal combustion engine, configured to provide an addition valve upstream of an exhaust gas purifying catalyst in an exhaust pipe connected to a combustion chamber in addition to a fuel injection valve injecting fuel for combustion in the combustion chamber of the internal combustion engine, and to inject a reducing agent from the addition valve in an addition amount in accordance with an operation state of the internal combustion engine. The apparatus includes a control unit for increasing the addition amount of said reducing agent with increase in at least one of a temperature of the addition valve and a value corresponding thereto, such that clogging of an injection hole of said addition valve is suppressed and for controlling a parameter other than the addition amount, that varies in accordance with an operation of the internal combustion engine and affects a catalyst temperature of the exhaust gas purifying catalyst, such that the catalyst temperature does not exceed an upper limit of an allowable range.

According to this configuration, the control unit increases the addition amount with the increase in the temperature of the addition valve and the increased reducing agent passes the addition valve, so that the heat of the addition valve is removed. The temperature of the addition valve is lowered, evaporation of the volatile component in the reducing agent is suppressed, and clogging of the injection hole in the addition valve is suppressed. On the other hand, the increased reducing agent burns, and the temperature of the exhaust gas purifying catalyst is raised by the heat generated during the combustion. In order to address this, the control unit controls the parameter other than the addition amount that varies in accordance with the operation of the internal combustion engine and affects the temperature of the exhaust gas purifying catalyst. Therefore, even if the temperature of the exhaust gas purifying catalyst is raised as a result of increase in the reducing agent, it is possible, by controlling the parameter, to suppress such a situation that the catalyst temperature of the exhaust gas purifying catalyst exceeds the upper limit of the allowable range.

Thus, according to the present invention, overheat of the exhaust gas purifying catalyst can be suppressed by controlling the parameter, while clogging of the injection hole of the addition valve is suppressed by increasing the addition amount.

Preferably, when at least one of the temperature of the addition valve and the corresponding value is high, the control unit makes a degree of increase in the addition amount greater than when at least one of the temperature of the addition valve and the corresponding value is low.

Here, as the amount of addition of the reducing agent injected from the addition valve is greater, an amount of heat removed from the addition valve by the reducing agent is increased and a degree of lowering in the temperature of the addition valve becomes greater. In this regard, in the present invention, when at least one of the temperature of the addition valve and the value corresponding thereto is high, the degree of increase in the addition amount is made larger than when at least one of the temperature of the addition valve and the value corresponding thereto is low. In this manner, the degree of increase in the addition amount is varied in accordance with the temperature of the addition valve. Therefore, when the temperature of the addition valve is relatively low, excessive cooling of the addition valve due to excessive increase in the addition amount can be suppressed. In addition, when the temperature of the addition valve is high, such a phenomenon as clogging of the injection hole of the addition valve due to an insufficient addition amount and resultant insufficient cooling of the addition valve can be suppressed.

Further preferably, the addition valve is arranged in the vicinity of a coolant pipe provided in the internal combustion engine, and the control unit employs a temperature of a coolant that flows through the coolant pipe as the corresponding value.

According to this configuration, as the addition valve is arranged in the vicinity of the coolant pipe provided in the internal combustion engine, the temperature of the addition valve tends to be affected by the heat of the coolant that flows in the coolant pipe. When the temperature of the coolant is not so high, such as during a low or intermediate load operation or the like of the internal combustion engine, the addition valve is cooled as a result of heat removal by the coolant, and clogging of the injection hole is unlikely. When the temperature of the coolant is high, such as during a high load operation or the like of the internal combustion engine, efficiency in cooling the addition valve is lowered, and the temperature of the addition valve may exceed the temperature at which the volatile component in the reducing agent evaporates. Therefore, according to the present invention, the effect of the invention described above is reliably obtained by employing the temperature of the coolant as the value corresponding to the temperature of the addition valve and by increasing the addition amount based on the corresponding value.

Further preferably, the control unit restricts an amount of fuel injection from the fuel injection valve, as control of the parameter.

In the internal combustion engine and the exhaust gas purifying apparatus, as the amount of fuel injection from the fuel injection valve is decreased, the temperature of the exhaust gas and the catalyst is accordingly lowered. The injection amount is thus restricted as in the present invention, so that the injection amount is decreased as compared with a case where the injection amount is not restricted, and the temperature of the exhaust gas is lowered. Then, the temperature of the catalyst is lowered, and it is less likely that the upper limit of the allowable range is exceeded. In this manner, according to the present invention, the effect of the invention described above is reliably obtained.

Further preferably, when at least one of the temperature of the addition valve and the corresponding value is high, the control unit restricts the amount of fuel injection to a larger extent than when at least one of the temperature of the addition valve and the corresponding value is low.

Here, as the injection amount is restricted to a larger extent, an amount of lowering in the temperature of the exhaust gas and the catalyst as a result of restriction becomes greater. In this regard, in the present invention, when at least one of the temperature of the addition valve and the value corresponding thereto is high (when the degree of increase in the addition amount is great and an amount of increase in the temperature of the catalyst is great), the injection amount is restricted to a larger extent than when at least one of the temperature of the addition valve and the value corresponding thereto is low. In this manner, the degree of restriction of the injection amount is varied in accordance with at least one of the temperature of the addition valve and the value corresponding thereto, so that undue lowering in the engine output due to excessive restriction of the injection amount can be suppressed when at least one of the temperature of the addition valve and the value corresponding thereto is relatively low. In addition, when at least one of the temperature of the addition valve and the value corresponding thereto is high, such a situation that restriction of the injection amount is insufficient (the injection amount is great) and the temperature of the catalyst consequently exceeds the upper limit of the allowable range can be suppressed.

Further preferably, the control unit decreases an amount of fuel injection from the fuel injection valve, as control of the parameter.

In the internal combustion engine and the exhaust gas purifying apparatus, as the amount of fuel injection from the fuel injection valve is decreased, the temperature of the exhaust gas and the catalyst is accordingly lowered. The injection amount is thus decreased as in the present invention, so that the temperature of the exhaust gas is lowered as compared with a case where the injection amount is not decreased. Then, the temperature of the catalyst is lowered, and it is unlikely that the upper limit of the allowable range is exceeded. In this manner, according to the present invention, the effect of the invention described above is reliably obtained.

Further preferably, when at least one of the temperature of the addition valve and the corresponding value is high, the control unit decreases the amount of fuel injection by a larger amount than when at least one of the temperature of the addition valve and the corresponding value is low.

Here, as the amount of fuel injection is decreased to a larger extent (the injection amount is decreased), an amount of lowering in the temperature of the exhaust gas and the catalyst as a result of decrease becomes greater. In this regard, in the present invention, when at least one of the temperature of the addition valve and the value corresponding thereto is high (when the degree of increase in the addition amount is great and the amount of increase in the temperature of the catalyst is great), the injection amount is decreased more than when at least one of the temperature of the addition valve and the value corresponding thereto is low. In this manner, the degree of decrease in the injection amount is varied in accordance with at least one of the temperature of the addition valve and the value corresponding thereto, so that undue lowering in the engine output due to excessive decrease in the injection amount can be suppressed when at least one of the temperature of the addition valve and the value corresponding thereto is relatively low. In addition, when at least one of the temperature of the addition valve and the value corresponding thereto is high, such a situation that decrease in the injection amount is insufficient (the injection amount is great) and the temperature of the catalyst exceeds the upper limit of the allowable range can be suppressed.

### Brief Description of the Drawings

Fig. 1 is a diagram showing a configuration of a first embodiment implementing the present invention.
Fig. 2 is a schematic plan view showing an addition valve and a portion around the same in an engine.
Fig. 3 is a timing chart illustrating a period during which a reducing agent is added and an interval of addition.
Fig. 4A is a flowchart showing a procedure for injection hole clogging suppression processing.
Fig. 4B is a flowchart showing a procedure for injection amount restriction processing.
Fig. 5 is a characteristic diagram showing relation of an engine coolant temperature, a catalyst bed temperature, an addition amount, and an injection amount upper limit.
Fig. 6 is a flowchart showing a procedure for injection amount decrease processing in a second embodiment of the present invention.
Fig. 7 is a characteristic diagram showing relation between an engine coolant temperature and a correction amount.
Fig. 8 is a characteristic diagram showing relation of an engine coolant temperature, a catalyst bed temperature, an addition amount, and a correction amount.

### Best Modes for Carrying Out the Invention

### First Embodiment

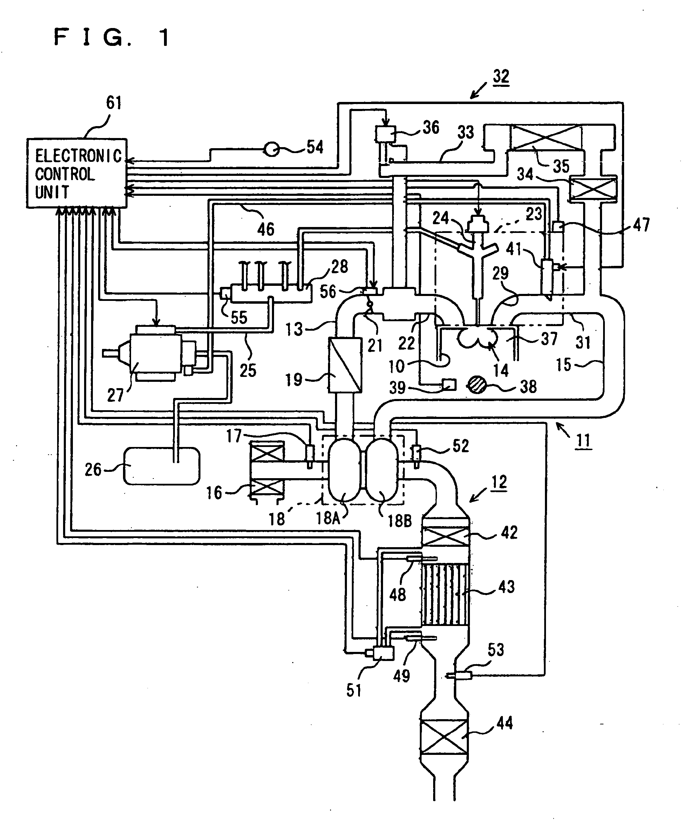

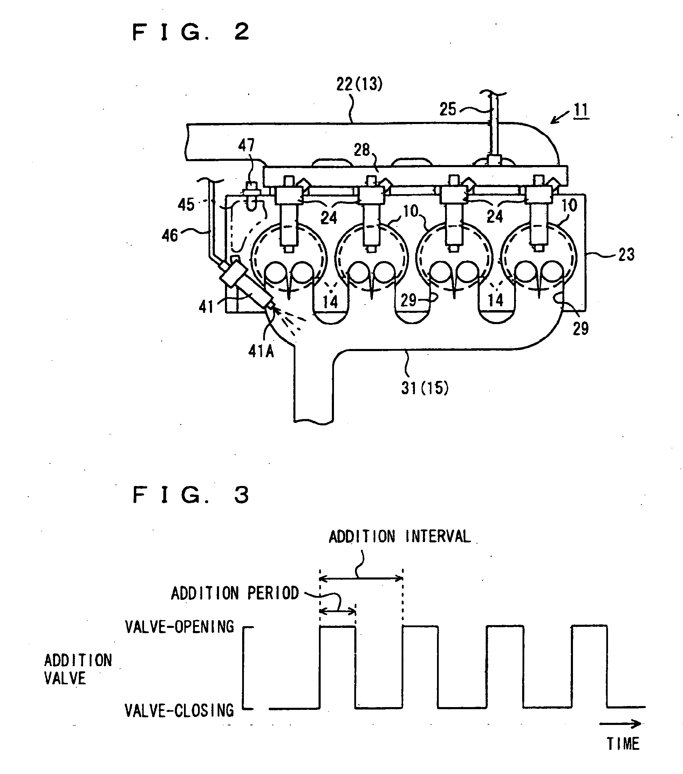

A first embodiment implementing the present invention will be described hereinafter with reference to Figs. 1 to 5. Fig. 1 shows a configuration of a multicylinder diesel engine (hereinafter, simply referred to as an engine) 11 serving as an internal combustion engine to which the present embodiment is applied and an exhaust gas purifying apparatus 12. Fig. 2 shows a schematic plan view of engine 11.

Engine 11 generally includes an intake pipe 13, a combustion chamber 14 for each cylinder 10, and an exhaust pipe 15. An air cleaner 16 purifying air taken in intake pipe 13 is provided in a most upstream portion of intake pipe 13. In engine 11, an airflow meter 17 for detecting a flow rate of air in intake pipe 13, a compressor 18A of a turbo charger 18, an intercooler 19, and an intake air throttle valve 21 are sequentially arranged toward the intake air downstream side of air cleaner 16. Intake pipe 13 is branched at an intake manifold 22 provided on the intake air downstream side of intake air throttle valve 21, and connected to combustion chamber 14 for each cylinder 10 through the branch portion.

In a cylinder head 23 of engine 11, a fuel injection valve 24 injecting fuel for combustion in combustion chamber 14 is provided for each cylinder 10. Each fuel injection valve 24 is supplied with fuel from a fuel tank 26 through a fuel supply pipe 25. In fuel supply pipe 25, a fuel pump 27 suctioning fuel from fuel tank 26 and pressurizing and delivering the fuel and a common rail 28 serving as a high-pressure fuel pipe accumulating the delivered high-pressure fuel are provided. Fuel injection valve 24 for each cylinder 10 is connected to common rail 28.

Meanwhile, a connection portion of exhaust pipe 15 and each combustion chamber 14 serves as an exhaust port 29. In exhaust pipe 15, an exhaust manifold 31 for gathering the exhaust gas exhausted from each combustion chamber 14 through exhaust port 29 and a turbine 18B of turbo charger 18 are provided.

In addition, engine 11 adopts an exhaust gas recirculation (hereinafter, referred to as "EGR") apparatus 32 for recirculating a part of the exhaust gas in the intake air. EGR apparatus 32 includes an EGR pipe 33 allowing communication between intake pipe 13 and exhaust pipe 15. An upstream side of EGR pipe 33 is connected to a portion of exhaust pipe 15 between exhaust manifold 31 and turbine 18B. In a midpoint of EGR pipe 33, an EGR cooler catalyst 34 purifying the recirculated exhaust gas, an EGR cooler 35 cooling the recirculated exhaust gas, and an EGR valve 36 regulating a flow rate of the recirculated exhaust gas are provided sequentially from the upstream side. The downstream side of EGR pipe 33 is connected to a portion of intake pipe 13 between intake air throttle valve 21 and intake manifold 22.

In such engine 11, the air taken in intake pipe 13 is purified in air cleaner 16, and thereafter introduced in compressor 18A of turbo charger 18. In compressor 18A, the introduced air is compressed and delivered to intercooler 19. The air of which temperature is raised as a result of compression is cooled in intercooler 19, and thereafter the air passes through intake air throttle valve 21 and intake manifold 22, and distributed and supplied to combustion chamber 14 of each cylinder 10. The flow rate of the air in intake pipe 13 is regulated by controlling a degree of opening of intake air throttle valve 21. The flow rate of the air, that is, the amount of intake air, is detected by airflow meter 17.

In combustion chamber 14 into which the air is introduced, fuel is injected from fuel injection valve 24 in the compression stroke of each cylinder 10. Then, a mixture of the air introduced through intake pipe 13 and the fuel injected from fuel injection valve 24 is burnt in combustion chamber 14. The combustion gas at high temperature and high pressure generated at this time causes a piston 37 to carry out reciprocating motion, a crankshaft 38 serving as an output shaft rotates, and drive force (output torque) of engine 11 is obtained. An NE sensor 39 detecting an engine speed NE indicating a rotation speed of crankshaft 38 is provided in engine 11.

The exhaust gas generated as a result of combustion in combustion chamber 14 of each cylinder 10 is introduced in turbine 18B of turbo charger 18 through exhaust manifold 31. When turbine 18B is driven by the stream of the introduced exhaust gas, compressor 18A provided in intake pipe 13 is driven in synchronization, and the air is compressed as described above.

Meanwhile, a part of the exhaust gas generated as a result of combustion is introduced in EGR pipe 33. The exhaust gas introduced in EGR pipe 33 is purified by EGR cooler catalyst 34 and cooled in EGR cooler 35, and thereafter recirculated in the air on the intake air downstream side of intake air throttle valve 21 in intake pipe 13. The flow rate of the exhaust gas thus recirculated is regulated by controlling the degree of opening of EGR valve 36.

Engine 11 is configured as described above. Exhaust gas purifying apparatus 12 for purifying the exhaust gas exhausted from engine 11 will now be described. Exhaust gas purifying apparatus 12 includes not only an addition valve 41 but also a plurality of (three) catalytic converters (a first catalytic convener 42, a second catalytic converter 43, and a third catalytic converter 44) serving as exhaust gas purifying catalysts.

First catalytic converter 42 at the most upstream portion is arranged on the exhaust downstream side of turbine 18B. A storage-reduction type NOx catalyst is accommodated in first catalytic converter 42. The NOx catalyst is implemented, for example, in such a manner that a honeycomb structure is employed as a carrier and an NOx absorbent capable of absorbing nitrogen oxide NOx in the presence of oxygen and a precious metal catalyst (precious metal) capable of oxidizing hydrocarbon HC are carried thereon.

The NOx absorbent has such a characteristic that it absorbs nitrogen oxide NOx in a state where the oxygen concentration in the exhaust gas is high, while it emits nitrogen oxide NOx in a state where the oxygen concentration is low. In addition, if hydrocarbon HC, carbon monoxide CO or the like is present in the exhaust gas when nitrogen oxide NOx is emitted in the exhaust gas, the precious metal catalyst promotes oxidation reaction of hydrocarbon HC or carbon monoxide CO, so that oxidation-reduction reaction employing nitrogen oxide NOx as an oxidation component and employing hydrocarbon HC and carbon monoxide CO as a reduction component occurs therebetween. Namely, hydrocarbon HC and carbon monoxide CO are oxidized to carbon dioxide CO₂ or water H₂O, and nitrogen oxide NOx is reduced to nitrogen N₂.

Second catalytic converter 43 is arranged on the exhaust downstream side of first catalytic converter 42. A storage-reduction type NOx catalyst is accommodated in second catalytic converter 43. The NOx catalyst includes a porous material allowing passage of a gas component in the exhaust gas and preventing passage of particulate matter PM in the exhaust gas. This porous material is employed as the carrier of the NOx catalyst, and the carrier carries the NOx absorbent and the precious metal catalyst. Third catalytic converter 44 is arranged on the exhaust downstream side of second catalytic converter 43. In third catalytic converter 44, an oxidizing catalyst purifying the exhaust gas through oxidation of hydrocarbon HC and carbon monoxide CO in the exhaust gas is carried.

Addition valve 41 is arranged in exhaust pipe 15, upstream of first catalytic converter 42. In the present embodiment, in order to satisfy this condition, addition valve 41 is attached to a portion in the vicinity of exhaust port 29 in cylinder head 23. Addition valve 41 is attached to cylinder head 23 in such a manner that an injection hole 41A at the tip end is exposed in exhaust port 29. As shown in Fig. 2, this position is located around a water jacket 45 serving as a coolant pipe provided in cylinder head 23. Addition valve 41 is attached to such a position, so that addition valve 41 is cooled by the engine coolant that flows through water jacket 45.

As shown in Fig. 1, addition valve 41 is connected to fuel pump 27 through a fuel pipe 46, and injects and adds the fuel supplied from fuel pump 27 into the exhaust gas as the reducing agent. The added fuel temporarily turns the exhaust gas to a reduction atmosphere, so that nitrogen oxide NOx stored in first catalytic converter 42 and second catalytic converter 43 is reduced and purified. In addition, second catalytic converter 43 simultaneously purifies particulate matter PM.

A coolant temperature sensor 47 detecting a temperature of the engine coolant (engine coolant temperature THW) that flows through water jacket 45 is attached to cylinder head 23. In addition, an exhaust gas temperature sensor 48 detecting a temperature of the exhaust gas (exhaust gas temperature) that passes a space between first catalytic converter 42 and second catalytic converter 43 in exhaust pipe 15, that is, the temperature of the exhaust gas before entering second catalytic converter 43, is arranged in that space. Moreover, an exhaust gas temperature sensor 49 detecting a temperature of the exhaust gas that passes through a space downstream of second catalytic converter 43 in exhaust pipe 15, that is, the temperature of the exhaust gas immediately after passing through second catalytic converter 43, is arranged in that space. Further, a differential pressure sensor 51 detecting a differential pressure between the pressure of the exhaust gas on the exhaust upstream side of second catalytic converter 43 and the pressure of the exhaust gas on the exhaust downstream side thereof is arranged in exhaust pipe 15. In addition, oxygen sensors 52, 53 detecting a concentration of oxygen in the exhaust gas are arranged on the exhaust upstream side of first catalytic converter 42 of exhaust pipe 15, and between second catalytic converter 43 and third catalytic converter 44, respectively.

An electronic control unit 61 serving as control means controls engine 11 and exhaust gas purifying apparatus 12 described above. Electronic control unit 61 includes a CPU executing various types of processing involved with control of engine 11, an ROM storing a program or data necessary for control, an RAM storing a result of processing or the like performed by the CPU, an input/output port for transmitting/receiving information to/from the outside, and the like.

In addition to each sensor described above, an accelerator sensor 54 detecting how far the accelerator is pressed down by a driver, a common rail sensor 55 detecting an internal pressure (rail pressure) of common rail 28, a throttle valve sensor 56 detecting a position of intake air throttle valve 21, and the like are connected to the input port of electronic control unit 61.

Meanwhile, intake air throttle valve 21, fuel injection valve 24, fuel pump 27, addition valve 41, EGR valve 36, and the like are connected to the output port of electronic control unit 61. Electronic control unit 61 controls these components connected to the output port based on the result of detection of each sensor, so as to control the operation of engine 11, exhaust gas purification, and the like.

Electronic control unit 61 controls fuel injection, which represents one type of control involved with the operation of engine 11. In fuel injection control, a basic injection amount optimal for an operation state of engine 11 is calculated based on an accelerator pressing-down degree detected by accelerator sensor 54 and engine speed NE detected by NE sensor 39. In addition, a maximum injection amount is determined by correcting, based on signals from various sensors, the basic maximum injection amount determined by engine speed NE (the theoretically possible injection amount). Comparing the basic injection amount and the maximum injection amount with each other, the smaller amount is set as a target injection amount. In addition, basic target injection timing is calculated based on the accelerator pressing-down degree and engine speed NE, that are corrected based on a signal from various sensors, and target injection timing optimal for the operation state of engine 11 at that time is calculated. Then, current supply to fuel injection valve 24 is controlled based on the target injection amount and the target injection timing, so as to open/close fuel injection valve 24.

In addition, electronic control unit 61 controls the exhaust gas purifying catalyst, which represents one type of control involved with purification of the exhaust gas. In order to control the exhaust gas purifying catalyst, four catalyst control modes, i.e., a catalyst regeneration control mode, a sulfur poisoning recovery control mode, an NOx reduction control mode, and a normal control mode, are set, and electronic control unit 61 selects the catalyst control mode in accordance with a state of catalytic converters 42 to 44 and executes that mode.

The catalyst regeneration control mode refers to a mode of control such that particulate matter PM deposited particularly in second catalytic converter 43 is burnt and exhausted as carbon dioxide CO₂ and water H₂O. The sulfur poisoning recovery control mode refers to a mode of control such that, when the NOx catalyst in first catalytic converter 42 and second catalytic converter 43 is poisoned with sulfur oxide SOx and storage capability of nitrogen oxide NOx is lowered, sulfur oxide SOx is released.

The NOx reduction control mode refers to such a mode that nitrogen oxide NOx absorbed in the NOx catalyst is released and reduced and purified so as to recover the NOx absorption capability of the NOx absorbent, by adding and supplying the reducing agent to upstream of first catalytic converter 42 in exhaust pipe 15 by means of addition valve 41 before the NOx absorption amount of the NOx absorbent in the NOx catalyst reaches the limit.

For example, as shown in Fig. 3, in this mode, an open/close cycle consisting of valve-opening and valve-closing of addition valve 41 is repeated. The reducing agent is supplied from addition valve 41 as a result of valve-opening, while supply is stopped as a result of valve-closing. By varying a period during which addition valve 41 is open (addition period) and a time period from the start of valve-opening until the start of next valve-opening (addition interval), the amount of addition of the reducing agent is adjusted. In other words, as the addition period is longer or as the addition interval is shorter, the addition amount becomes greater. In the present embodiment, the addition amount is adjusted by varying the addition interval.

The state other than described above corresponds to the normal control mode, in which the reducing agent is not added from addition valve 41.

Here, as injection hole 41A of addition valve 41 is exposed in exhaust port 29, the tip end portion of addition valve 41 including the portion around injection hole 41A tends to be exposed to the exhaust gas and the temperature thereof tends to be high.

In addition, when the temperature of the engine coolant (engine coolant temperature THW) that flows through water jacket 45 is high in a high-load operation or the like of engine 11, efficiency in cooling addition valve 41 by the engine coolant is lowered and the temperature of addition valve 41 tends to be high. As the temperature is raised, the volatile component contained in the reducing agent evaporates, and the remaining deposit component is adhered and deposited in injection hole 41A of addition valve 41 and its surroundings. As the deposits clog injection hole 41A, the reducing agent may not appropriately be injected through injection hole 41 A and a spray state may be poorer. In order to overcome such defects, it is effective to moderately cool the tip end portion of addition valve 41, particularly the portion around injection hole 41A.

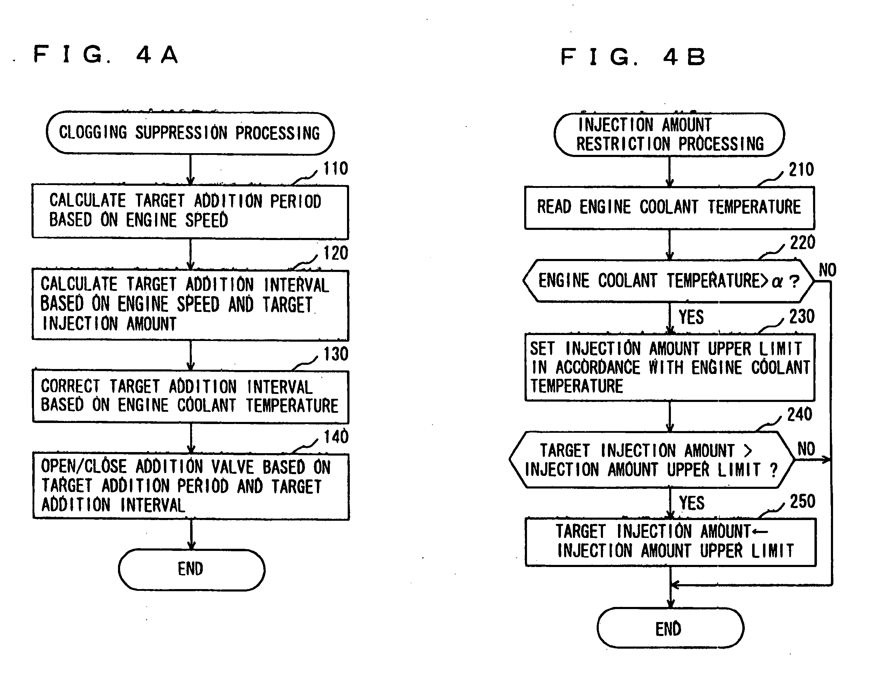

In the present embodiment, NOx reduction is controlled such that clogging of injection hole 41 A of addition valve 41 is suppressed. Fig. 4A is a flowchart showing a specific procedure for clogging suppression processing. Electronic control unit 61 executes a series of processing shown in the flowchart as processing to be performed every prescribed time.

In the clogging suppression processing, initially in step 110, electronic control unit 61 calculates a target period of addition of the reducing agent, that is, a target valve-opening period of addition valve 41, based on engine speed NE. In addition, in step 120, a target interval of addition of the reducing agent is calculated. In calculation, a map defining in advance relation, for example, of engine speed NE and the target injection amount with the target addition interval is referred to. In the map, it is defined such that the addition interval is shorter as engine speed NE is higher or as the target injection amount is greater. Then, the target addition interval corresponding to engine speed NE and the target injection amount at that time is found based on the map. Here, as the target injection amount, the injection amount separately calculated in fuel injection control described above is used.

In succession, in step 130, the target addition interval calculated in step 120 above is corrected, using the temperature of addition valve 41 or a value corresponding thereto. Here, engine coolant temperature THW detected by coolant temperature sensor 47 is employed as the value corresponding to the temperature of addition valve 41. This is because addition valve 41 is arranged in the vicinity of water jacket 45 provided in cylinder head 23 as described above, and the temperature of addition valve 41 tends to be affected by the heat of the engine coolant that flows through water jacket 45. In correction, the target addition interval in step 120 is corrected such that, when engine coolant temperature THW is high, the target addition interval is made shorter than when engine coolant temperature THW is low, that is, such that the number of times of addition per unit time is greater and the addition amount is increased.

In step 140, current supply to addition valve 41 is controlled based on the target addition period in step 110 and the target addition interval corrected in step 130. As a result of current supply, addition valve 41 is opened/closed, and the reducing agent is injected through injection hole 41A into exhaust port 29. After the processing in step 140, a series of clogging suppression processing ends.

As described above, as engine coolant temperature THW is higher, the efficiency in cooling of addition valve 41 by the engine coolant is lowered and the temperature of addition valve 41 is raised. Meanwhile, as a result of increase in the addition amount, a large amount of reducing agent not yet much affected by the heat of the exhaust gas and at a low temperature passes addition valve 41. The reducing agent that passes removes a large amount of heat of addition valve 41, and the temperature of addition valve 41 becomes lower than the temperature at which the volatile component in the reducing agent evaporates. Consequently, formation of deposits in injection hole 41A and the portion around the same resulting from evaporation of the volatile component is suppressed.

In addition, in increasing the addition amount, when engine coolant temperature THW is high, the degree of increase is made larger than when engine coolant temperature THW is low. In other words, the degree of increase in the addition amount is varied in accordance with engine coolant temperature THW correlated with the temperature of addition valve 41. Therefore, when the temperature of addition valve 41 (engine coolant temperature THW) is relatively low, the degree of increase in the addition amount is small, and the amount of heat removed from addition valve 41 by the increased reducing agent is relatively small. Accordingly, excessive cooling of addition valve 41 by the increased reducing agent is less likely. Alternatively, when the temperature of addition valve 41 (engine coolant temperature THW) is high, the degree of increase in the addition amount is great, and the amount of heat removed from addition valve 41 by the increased reducing agent is greater. Accordingly, such a phenomenon that increase in the addition amount is insufficient and addition valve 41 is not sufficiently cooled is less likely.

On the other hand, heat generated as a result of combustion of the reducing agent increased in the above-described manner causes increase in the temperature of the NOx catalyst (catalyst bed temperature) in first and second catalytic converters 42, 43. If the NOx catalyst is excessively heated, the upper limit of a temperature range (allowable range) where the NOx catalyst appropriately functions may be exceeded.

In the present embodiment, in order for the catalyst bed temperature not to exceed the upper limit of the allowable range due to the increase in the amount of addition of the reducing agent, control for restricting the amount of fuel injection from fuel injection valve 24 is carried out. Fig. 4B is a flowchart showing a specific procedure for injection amount restriction processing. Electronic control unit 61 executes a series of processing shown in the flowchart as processing to be performed every prescribed time.

In the injection amount restriction processing, initially in step 210, electronic control unit 61 reads engine coolant temperature THW detected by coolant temperature sensor 47 at that time. Then, in step 220, electronic control unit 61 determines whether engine coolant temperature THW in step 210 is higher than a threshold value α that has been set in advance. Threshold value α represents an upper limit, or a value close thereto, of a range of temperature that engine coolant temperature THW may take on the condition that the catalyst bed temperature does not exceed the upper limit of the allowable range even if the reducing agent in an amount increased in accordance with the increase in engine coolant temperature THW is added.

Here, it is assumed that a determination condition in step 220 is satisfied (THW>α). Then, if the fuel is injected in accordance with the target injection amount, the catalyst bed temperature may exceed the upper limit of the allowable range due to the heat of the exhaust gas, the heat generated during combustion of the reducing agent, and the like. Accordingly, in order to lower the temperature of the exhaust gas such that the catalyst bed temperature does not exceed the upper limit, in step 230, the injection amount upper limit in accordance with engine coolant temperature THW in step 210 is set. When engine coolant temperature THW is high, the injection amount upper limit is set to a value lower than when engine coolant temperature THW is low. That is, when deviation from threshold value α of engine coolant temperature THW is great, the injection amount upper limit is set to a value lower than when deviation is small.

In succession, in step 240, whether the target injection amount calculated separately in fuel injection control described above is greater than the injection amount upper limit in step 230 is determined. If this determination condition is satisfied (target injection amount > injection amount upper limit), the injection amount upper limit is set in step 250 as the final target injection amount to be instructed to addition valve 41. That is, the target injection amount is restricted by the injection amount upper limit. After the processing in step 250, a series of injection amount restriction processing ends.

In contrast, if the determination condition in step 220 above is not satisfied (THW≤α) and if the determination condition in step 240 is not satisfied (target injection amount ≤ injection amount upper limit), in both cases, it is considered that there is no possibility that the catalyst bed temperature exceeds the upper limit of the allowable range. Therefore, a series of injection amount restriction processing ends without performing the processing in steps 230 to 250 in the former case, or without performing the processing in step 250 in the latter case. In these cases, the target injection amount is not restricted but used as it is as the final target injection amount.

Therefore, as engine coolant temperature THW is higher, through the clogging suppression processing described above, the amount of addition of the reducing agent from addition valve 41 is increased in order to suppress clogging of injection hole 41A, and in addition, when engine coolant temperature THW is high, the degree of increase is made larger than when engine coolant temperature THW is low, whereby the catalyst bed temperature is raised. On the other hand, if engine coolant temperature THW exceeds threshold value α and if the catalyst bed temperature is likely to exceed the upper limit of the allowable range, the injection amount upper limit is set based on engine coolant temperature THW. The target injection amount is restricted so as not to exceed the injection amount upper limit. Namely, when the target injection amount exceeds the injection amount upper limit, the target injection amount is substantially decreased. As a result of restriction of the target injection amount, the target injection amount is made smaller than when it is not restricted, and the fuel in an amount in accordance with that target injection amount is injected and burnt, whereby the temperature of the exhaust gas is lowered. As the increase in the catalyst bed temperature due to the exhaust gas is made smaller, the catalyst bed temperature is less likely to exceed the upper limit of the allowable range.

In restricting the target injection amount, when engine coolant temperature THW is high, the injection amount upper limit is set to a value lower than when engine coolant temperature THW is low, and the target injection amount is restricted to a larger extent. In other words, the degree of restriction of the target injection amount is varied in accordance with engine coolant temperature THW used for correcting the target addition interval (increase in the addition amount). Therefore, when engine coolant temperature THW is relatively low, that is, when the degree of increase in the addition amount is relatively small and when the increase in the catalyst bed temperature due to the increase in the addition amount is small, the degree of restriction of the target injection amount is small. Accordingly, such a phenomenon that the target injection amount is excessively restricted and output of engine 11 is unduly lowered is less likely. In addition, when engine coolant temperature THW is high, that is, when the degree of increase in the addition amount is great and when the increase in the catalyst bed temperature due to the increase in the addition amount is great, the degree of restriction of the target injection amount is great. Accordingly, such a phenomenon that restriction of the target injection amount is insufficient (the target injection amount is greater than an appropriate value) and the catalyst bed temperature exceeds the upper limit of the allowable range is less likely.

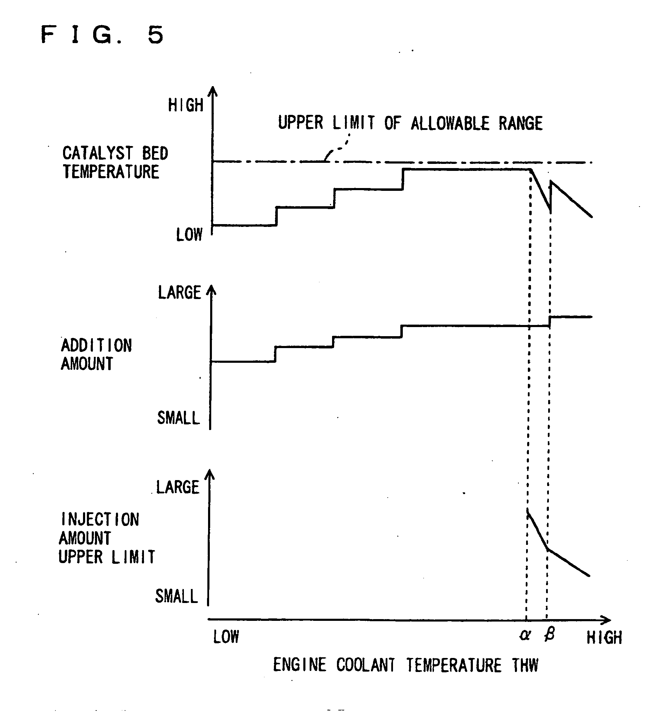

Fig. 5 shows relation of engine coolant temperature THW, the catalyst temperature, the amount of addition of the reducing agent, and the injection amount upper limit. Here, in a temperature region where engine coolant temperature THW is lower than threshold value α, restriction of the target injection amount by the injection amount upper limit is not carried out. In addition, in this temperature region, in order to suppress clogging of injection hole 41A of addition valve 41, when engine coolant temperature THW is high, the amount of addition of the reducing agent is made larger than when engine coolant temperature THW is low. With the increase in the addition amount, that is, with the increase in engine coolant temperature THW, the catalyst bed temperature is also raised and approaches to the upper limit of the allowable range

When engine coolant temperature THW attains to threshold value α or higher, the injection amount upper limit in accordance with engine coolant temperature THW is set. When the target injection amount exceeds the injection amount upper limit, the injection amount upper limit is set as the target injection amount, so that the target injection amount is made smaller, the temperature of the exhaust gas is lowered, and the catalyst bed temperature is accordingly lowered. As a result of such lowering, such a situation that the catalyst bed temperature exceeds the upper limit of the allowable range is suppressed. As deviation from the upper limit of the allowable range of the catalyst bed temperature is greater, further increase in the addition amount is permitted.

On the other hand, due to the increase in engine coolant temperature THW, clogging of injection hole 41A is more likely. If the addition amount is increased after engine coolant temperature THW attains to a prescribed value β (>α), clogging of injection hole 41A is suppressed. In contrast, the catalyst bed temperature is raised with the increase in the addition amount and approaches the upper limit of the allowable range. In order to address this, the injection amount upper limit is set to a lower value with the increase in engine coolant temperature THW. As a result of restriction-based on the injection amount upper limit, the target injection amount is made smaller, and the temperature of the exhaust gas and the catalyst bed temperature are lowered.

According to the present embodiment described in detail above, the following effects can be obtained.
(1) With the increase in the temperature of addition valve 41, the amount of addition of the reducing agent is increased, and the target injection amount representing a parameter other than the addition amount that affects the catalyst bed temperature is controlled such that the catalyst bed temperature does not exceed the upper limit of the allowable range. Therefore, while suppressing clogging of injection hole 41A by increasing the addition amount, overheat of the NOx catalyst can be suppressed by controlling the target injection amount.
(2) Engine coolant temperature THW is employed as the value corresponding to the temperature of addition valve 41. When engine coolant temperature THW is high, the degree of increase in the addition amount is made larger than when engine coolant temperature THW is low. By thus varying the degree of increase in the addition amount in accordance with engine coolant temperature THW, when the temperature of addition valve 41 is relatively low, excessive cooling of addition valve 41 due to excessive increase in the addition amount can be suppressed. In addition, when the temperature of addition valve 41 is high, clogging of injection hole 41 A due to insufficient addition amount and resultant insufficient cooling of addition valve 41 can be suppressed.
(3) The injection amount upper limit in accordance with engine coolant temperature THW is set. When the target injection amount exceeds the injection amount upper limit, the injection amount upper limit is set as the final target injection amount. As a result of such restriction using the injection amount upper limit, the target injection amount is made smaller than when no restriction is imposed, and the temperature of the exhaust gas is lowered. Accordingly, the catalyst bed temperature is lowered and less likely to exceed the upper limit of the allowable range. Therefore, the effect described in (1) above is reliably attained.
   In addition, as a result of restriction above, the target injection amount can be decreased only when the catalyst bed temperature is likely to exceed the upper limit of the allowable range, that is, only when necessary. Therefore, unnecessary decrease in the target injection amount can be suppressed, as compared with a case where the target injection amount is decreased without exception when engine coolant temperature THW exceeds threshold value α
(4) When engine coolant temperature THW is high, the injection amount upper limit is set to a value lower than when engine coolant temperature THW is low, whereby the target injection amount is restricted to a larger extent. By thus varying the degree of restriction of the target injection amount in accordance with engine coolant temperature THW, undue lowering in the output of engine 11 due to excessive restriction of the target injection amount can be suppressed when engine coolant temperature THW is relatively low. In addition, when engine coolant temperature THW is high, such a situation that restriction of the target injection amount is insufficient (the target injection amount is great) and the catalyst bed temperature exceeds the upper limit of the allowable range can be suppressed.
(5) The temperature of addition valve 41 is affected not only by engine coolant temperature THW but also by the heat of the exhaust gas. The temperature of the exhaust gas tends to vary in accordance with the fuel injection amount and tends to lower as the fuel injection amount is smaller. Here, in the first embodiment, with the increase in engine coolant temperature THW, the target injection amount is restricted and decreased. Therefore, not only by increasing the addition amount but also by decreasing the target injection amount, the temperature of addition valve 41 is lowered and the clogging phenomenon of injection hole 41 A can further effectively be suppressed.

### Second Embodiment

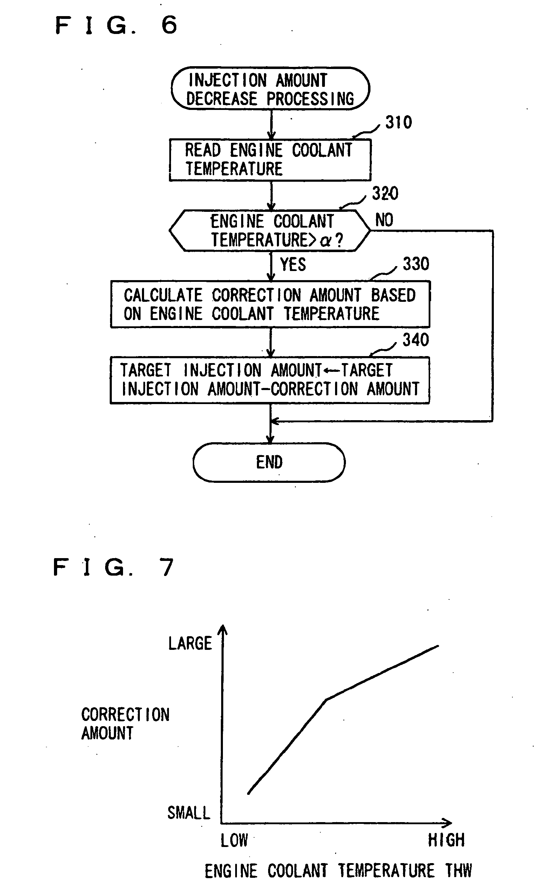

A second embodiment implementing the present invention will now be described with reference to Figs. 6 to 8. The second embodiment is different from the first embodiment in that the target injection amount is decreased, instead of restricting the same, for control such that the catalyst bed temperature does not exceed the upper limit of the allowable range with the increase in the addition amount of the reducing agent. As the configuration of engine 11 and exhaust gas purifying apparatus 12 is the same as in the first embodiment, description thereof will not be repeated.

Fig. 6 is a flowchart showing a specific procedure for injection amount decrease processing. Electronic control unit 61 executes a series of processing shown in the flowchart as processing to be performed every prescribed time.

In the injection amount decrease processing, initially in step 310, electronic control unit 61 reads engine coolant temperature THW detected by coolant temperature sensor 47 at that time. Then, in step 320, electronic control unit 61 determines whether engine coolant temperature THW in step 310 is higher than threshold value α. Threshold value α is the same as described in the first embodiment.

Here, it is assumed that a determination condition in step 320 above is satisfied (THW>α). Then, if the fuel is injected in accordance with the target injection amount as it is, the catalyst bed temperature may exceed the upper limit of the allowable range due to the heat of the exhaust gas, the heat generated during combustion of the reducing agent, and the like. Accordingly, the processing for lowering the temperature of the exhaust gas such that the catalyst bed temperature does not exceed the upper limit is performed. Specifically, in step 330, a correction amount (>0) for decreasing the target injection amount is calculated based on engine coolant temperature THW in step 310. For example, as shown in Fig. 7, the correction amount can be set such that the correction amount is smaller when engine coolant temperature THW is low, while the correction amount is greater as engine coolant temperature THW is higher, that is, as deviation from threshold value α of engine coolant temperature THW is greater.

In succession, in step 340, in controlling fuel injection described above, the correction amount in step 330 is subtracted from the target injection amount calculated in a different routine, and the subtraction result is set as the final target injection amount to be instructed to fuel injection valve 24. After the processing in step 340, a series of injection amount decrease processing ends.

In contrast, if the determination condition in step 320 above is not satisfied (THW≤α), it is considered that there is no possibility that the catalyst bed temperature exceeds the upper limit of the allowable range even though the addition amount is increased with the increase in engine coolant temperature THW. Therefore, in this case, a series of injection amount decrease processing ends without performing the processing in steps 330 and 340. Here, the target injection amount is not corrected but used as it is as the final target injection amount.

Therefore, as engine coolant temperature THW is higher, through the clogging suppression processing described above, the amount of addition of the reducing agent from addition valve 41 is increased in order to suppress clogging of injection hole 41A, and in addition, when engine coolant temperature THW is high, the degree of increase is made larger than when engine coolant temperature THW is low, whereby the catalyst bed temperature becomes higher. On the other hand, if engine coolant temperature THW exceeds threshold value α and if the catalyst bed temperature is likely to exceed the upper limit of the allowable range, the correction amount is calculated based on engine coolant temperature THW. As a result of correction using the correction amount, the target injection amount is decreased. As the fuel in the decreased target injection amount is injected and burnt, the temperature of the exhaust gas is lowered. As the increase in the catalyst bed temperature due to the exhaust gas is made smaller, it is less likely that the catalyst bed temperature exceeds the upper limit of the allowable range.

In decreasing the target injection amount, when engine coolant temperature THW is high, the correction amount is set to a value greater than when engine coolant temperature THW is low, and the target injection amount is corrected to a lower value. In other words, the degree of decrease in the target injection amount is varied in accordance with engine coolant temperature THW used for correcting the target addition interval (correction for increase in the addition amount). Therefore, when engine coolant temperature THW is relatively low, that is, when the degree of increase in the addition amount is relatively small and when the increase in the catalyst bed temperature due to the increase in the addition amount is small, the degree of decrease in the target injection amount is small. Accordingly, such a phenomenon that the target injection amount is excessively decreased and the output of engine 11 is unduly lowered is less likely. In addition, when engine coolant temperature THW is high, that is, when the degree of increase in the addition amount is great and when the increase in the catalyst bed temperature due to the increase in the addition amount is great, the degree of decrease in the target injection amount is great. Accordingly, such a phenomenon that decrease in the target injection amount is insufficient (the target injection amount is greater than an appropriate value) and the catalyst bed temperature exceeds the upper limit of the allowable range is less likely.

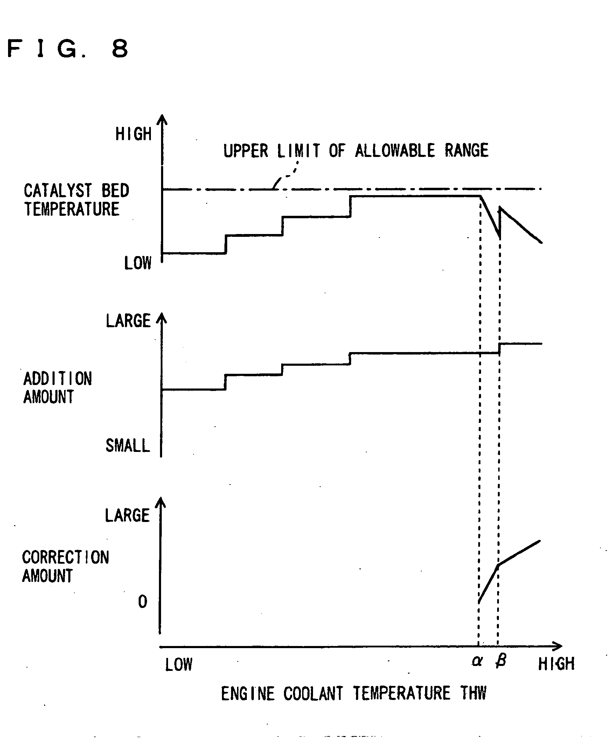

Fig. 8 shows relation of engine coolant temperature THW, the catalyst bed temperature, the amount of addition of the reducing agent, and the correction amount for the target injection amount. Here, in a temperature region where engine coolant temperature THW is lower than threshold value α, the target injection amount is not decreased. In addition, in this temperature region, in order to suppress clogging of injection hole 41A of addition valve 41, when engine coolant temperature THW is high, the degree of increase is made larger than when engine coolant temperature THW is low, so that the amount of addition of the reducing agent becomes greater. With the increase in the addition amount, that is, with the increase in engine coolant temperature THW, the catalyst bed temperature is also raised and approaches to the upper limit of the allowable range.

When engine coolant temperature THW attains to threshold value α or greater, the correction amount (>0) in accordance with engine coolant temperature THW is calculated, and the target injection amount is decreased by that correction amount. When fuel in an amount in accordance with the decreased target injection amount is injected from fuel injection valve 24 and burnt, the temperature of the exhaust gas is lowered, and the catalyst bed temperature is accordingly lowered. As a result of such temperature lowering, such a situation that the catalyst bed temperature exceeds the upper limit of the allowable range is suppressed. As deviation between the catalyst bed temperature and the upper limit of the allowable range becomes greater, further increase in the addition amount is permitted.

On the other hand, due to the increase in engine coolant temperature THW, clogging of injection hole 41A is more likely. If the addition amount is increased when engine coolant temperature THW attains to a prescribed value β (>α), clogging of injection hole 41A is suppressed, whereas the catalyst bed temperature is raised with the increase in the addition amount and approaches the upper limit of the allowable range. In order to address this, a larger value for the correction amount is set, and the target injection amount is decreased to a larger extent using this larger correction amount. When fuel in an amount in accordance with the decreased target injection amount is injected from fuel injection valve 24 and burnt, the temperature of the exhaust gas and the catalyst bed temperature are lowered.

According to the second embodiment described above as well, in addition to the effects similar to (1), (2) and (5) described above as in the first embodiment, the following effect can be obtained.
(6) The correction amount in accordance with engine coolant temperature THW is set, so that the target injection amount is decreased using that correction amount. As a result of injection and combustion of the fuel in the decreased target injection amount, the temperature of the exhaust gas is lowered. Therefore, such a situation that the catalyst bed temperature exceeds the upper limit of the allowable range can reliably be suppressed by lowering the catalyst bed temperature.
(7) When engine coolant temperature THW is high, the correction amount is greater than when engine coolant temperature THW is low. By thus varying the correction amount used for decreasing the target injection amount in accordance with engine coolant temperature THW, when engine coolant temperature THW is relatively low, undue lowering in the output of engine 11 due to excessive decrease in the target injection amount can be suppressed. In addition, when engine coolant temperature THW is high, such a situation that decrease in the target injection amount is insufficient (the target injection amount is great) and the catalyst bed temperature exceeds the upper limit of the allowable range can be suppressed.

The present invention can be implemented in another embodiment shown below.
- A substance other than the fuel may be injected from addition valve 41 as the reducing agent.
- The amount of addition of the reducing agent from addition valve 41 may be adjusted by varying a period during which the reducing agent is added, instead of or in addition to the addition interval above.
- In the embodiments, the addition amount is corrected by correcting the target addition interval based on engine coolant temperature THW, because the temperature of addition valve 41 is affected by the engine coolant. Instead or in addition, the addition amount (addition interval, addition period) may be corrected based on a parameter other than engine coolant temperature THW that affects the temperature of addition valve 41. For example, the temperature of the exhaust gas or the engine load may be employed as the parameter. In this case, the addition amount is increased as the temperature of the exhaust gas is higher or as the engine load is higher. Alternatively, the addition amount (addition interval, addition period) may be corrected based on the detected temperature of addition valve 41 itself.
- The parameter that is varied along with the operation of engine 11 and affects the catalyst bed temperature may include supercharge pressure, injection timing, rail pressure, and the like, in addition to the above-mentioned fuel injection amount. Therefore, any of these parameters (including the target injection amount) or combination thereof may be used to carry out control such that the catalyst bed temperature does not exceed the upper limit of the allowable range with the increase in the addition amount. For example, an amount of air supplied to combustion chamber 14 is increased by raising the supercharge pressure, so that the temperature of the exhaust gas and hence the catalyst bed temperature can be lowered. In addition, earlier injection timing is set (injection timing is advanced) so that the exhaust gas is emitted while the combustion pressure is low, and the temperature of the exhaust gas (catalyst bed temperature) can be lowered. Moreover, the end of an injection period is moved ahead by raising the rail pressure, so that the temperature of the exhaust gas (catalyst bed temperature) can be lowered.
- Exhaust gas purifying apparatus 12 of the present invention is applicable to an engine in which addition valve 41 is arranged at a position distant from water jacket 45 of cylinder head 23, for example, on the exhaust downstream side of exhaust port 29. In this case, as addition valve 41 is less likely to be affected by the heat of the engine coolant, whether or not the temperature of addition valve 41 exceeds the temperature at which the volatile component in the reducing agent evaporates is monitored based on a parameter other than engine coolant temperature THW, and the amount of addition of the reducing agent is increased based on the result of monitoring. Examples of such parameters include the temperature of the exhaust gas, the engine load, and the like as described above.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

## Claims

1. An exhaust gas purifying apparatus (12) of an internal combustion engine (11), configured to provide an addition valve (41) upstream of an exhaust gas purifying catalyst (42, 43, 44) in an exhaust pipe (15) connected to a combustion chamber (14) in addition to a fuel injection valve (24) injecting fuel for combustion in the combustion chamber (14) of the internal combustion engine (11), and to inject a reducing agent from said addition valve (41) in an addition amount in accordance with an operation state of the internal combustion engine (11),
said exhaust gas purifying apparatus (12) being **characterized by** comprising:
a control unit (61) for increasing said addition amount of said reducing agent with increase in at least one of a temperature of said addition valve (41) and a value corresponding thereto, such that clogging of an injection hole (41A) of said addition valve (41) is suppressed, and for controlling a parameter other than said addition amount that varies in accordance with an operation of said internal combustion engine (11) and affects a catalyst temperature of said exhaust gas purifying catalyst (42, 43, 44), such that said catalyst temperature does not exceed an upper limit of an allowable range.

2. The exhaust gas purifying apparatus (12) of an internal combustion engine (11) according to claim 1, wherein
when at least one of said temperature of said addition valve (41) and said corresponding value is high, said control unit (61) makes a degree of increase in said addition amount greater than when at least one of said temperature of said addition valve (41) and said corresponding value is low.

3. The exhaust gas purifying apparatus (12) of an internal combustion engine (11) according to claim 2, wherein
said addition valve(41) is arranged in vicinity of a coolant pipe (45) provided in said internal combustion engine (11), and said control unit (61) employs a temperature of a coolant that flows through said coolant pipe (45) as said corresponding value.

4. The exhaust gas purifying apparatus (12) of an internal combustion engine (11) according to claim 1, wherein
said control unit (61) restricts an amount of fuel injection from said fuel injection valve (24), as control of said parameter.

5. The exhaust gas purifying apparatus (12) of an internal combustion engine (11) according to claim 4, wherein
when at least one of said temperature of said addition valve (41) and said corresponding value is high, said control unit (61) restricts said amount of fuel injection to a larger extent than when at least one of said temperature of said addition valve (41) and said corresponding value is low.

6. The exhaust gas purifying apparatus (12) of an internal combustion engine (11) according to claim 1, wherein
said control unit (61) decreases an amount of fuel injection from said fuel injection valve (24), as control of said parameter.

7. The exhaust gas purifying apparatus (12) of an internal combustion engine (11) according to claim 6, wherein
when at least one of said temperature of said addition valve(41) and said corresponding value is high, said control unit (61) decreases said amount of fuel injection by a larger amount than when at least one of said temperature of said addition valve (41) and said corresponding value is low.

## Patentansprüche

1. Abgasreinigungsvorrichtung (12) für einen Verbrennungsmotor (11), die so gestaltet ist, dass sie stromaufwärts von einem Abgasreinigungskatalysator (42, 43, 44) in einer mit einer Brennkammer (14) verbundenen Abgasleitung (15) zusätzlich zu einem Kraftstoff-Einspritzventil (24), das Kraftstoff zum Verbrennen in der Brennkammer (14) des Verbrennungsmotors (11) einspritzt, ein Zusatzventil (41) bereitstellt, und aus dem Zusatzventil (41) ein Reduktionsmittel in einer Zugabemenge, die einem Betriebszustand des Verbrennungsmotors (11) entspricht, einspritzt,
wobei die Abgasreinigungsvorrichtung (12) **dadurch gekennzeichnet ist, dass** sie aufweist:
eine Steuereinheit (61), zum Erhöhen der Zugabemenge des Reduktionsmittels bei einer Erhöhung einer Temperatur des Zusatzventils (41) und/oder eines entsprechenden Werts, derart, dass eine Verstopfung eines Einspritzlochs (41A) des Zusatzventils (41) verhindert wird, und zum Steuern eines Parameters, bei dem es sich nicht um die Zugabemenge handelt und der gemäß einem Betrieb des Verbrennungsmotors (11) variiert und der eine Katalysatortemperatur des Abgasreinigungskatalysators (42, 43, 44) beeinflusst, derart, dass die Katalysatortemperatur eine Obergrenze eines zulässigen Bereichs nicht überschreitet.

2. Abgasreinigungsvorrichtung (12) für einen Verbrennungsmotor (11) nach Anspruch 1, wobei,
wenn die Temperatur des Zusatzventils (41) und/oder der entsprechende Wert hoch ist bzw. sind, die Steuereinheit (61) den Grad der Erhöhung der Zugabemenge größer macht als wenn die Temperatur des Zusatzventils (41) und/oder der entsprechende Wert niedrig ist bzw. sind.

3. Abgasreinigungsvorrichtung (12) für einen Verbrennungsmotor (11) nach Anspruch 2, wobei
das Zusatzventil (41) in der Nähe einer Kühlmittelleitung (45) angeordnet ist, die im Verbrennungsmotor (11) vorgesehen ist, und wobei die Steuereinheit (61) eine Temperatur eines Kühlmittels, das durch die Kühlmittelleitung (45) strömt, als den entsprechenden Wert verwendet.

4. Abgasreinigungsvorrichtung (12) für einen Verbrennungsmotor (11) nach Anspruch 1, wobei
die Steuereinheit (61) als Steuerung des Parameters eine Kraftstoff-Einspritzmenge aus dem Kraftstoff-Einspritzventil (24) beschränkt.

5. Abgasreinigungsvorrichtung (12) für einen Verbrennungsmotor (11) nach Anspruch 4, wobei,
wenn die Temperatur des Zusatzventils (41) und/oder der entsprechende Wert hoch ist bzw. sind, die Steuereinheit (61) die Kraftstoff-Einspritzmenge in größerem Umfang beschränkt als wenn die Temperatur des Zusatzventils (41) und/oder der entsprechende Wert niedrig ist bzw. sind.

6. Abgasreinigungsvorrichtung (12) für einen Verbrennungsmotor (11) nach Anspruch 1, wobei
die Steuereinheit (61) als Steuerung des Parameters eine Kraftstoff-Einspritzmenge aus dem Kraftstoff-Einspritzventil (24) verringert.

7. Abgasreinigungsvorrichtung (12) für einen Verbrennungsmotor (11) nach Anspruch 4, wobei,
wenn die Temperatur des Zusatzventils (41) und/oder der entsprechende Wert hoch ist bzw. sind, die Steuereinheit (61) die Kraftstoff-Einspritzmenge in größerem Umfang verringert als wenn die Temperatur des Zusatzventils (41) und/oder der entsprechende Wert niedrig ist bzw. sind.

## Revendications

1. Appareil (12) de purification de gaz d'échappement d'un moteur à combustion interne (11), configuré pour prévoir une soupape d'addition (41) en amont d'un catalyseur (42, 43, 44) de purification de gaz d'échappement dans un tuyau d'échappement (15) relié à une chambre de combustion (14) en plus d'une soupape d'injection de carburant (24) injectant du carburant pour la combustion dans la chambre de combustion (14) du moteur à combustion interne (11), et pour injecter un agent réducteur depuis ladite soupape d'addition (41) en une proportion d'addition selon un état de fonctionnement du moteur à combustion interne (11),
ledit appareil (12) de purification de gaz d'échappement étant **caractérisé par** le fait de comprendre :
une unité de commande (61) destinée à augmenter ladite proportion d'addition dudit agent réducteur avec l'augmentation d'au moins l'une d'une température de ladite soupape d'addition (41) et d'une valeur correspondante, de sorte que le colmatage d'un trou d'injection (41A) de ladite soupape d'addition (41) soit éliminé, et à commander un paramètre autre que ladite proportion d'addition qui varie selon un fonctionnement dudit moteur à combustion interne (11) et affecte une température catalytique dudit catalyseur (42, 43, 44) de purification de gaz d'échappement, de sorte que ladite température catalytique ne dépasse pas une limite supérieure d'une plage admissible.

2. Appareil (12) de purification de gaz d'échappement d'un moteur à combustion interne (11) selon la revendication 1, dans lequel
lorsqu'au moins l'une de ladite température de ladite soupape d'addition (41) et de ladite valeur correspondante est élevée, ladite unité de commande (61) amène un degré d'augmentation de ladite proportion d'addition à être plus important que lorsqu'au moins l'une de ladite température de ladite soupape d'addition (41) et de ladite valeur correspondante est basse.

3. Appareil (12) de purification de gaz d'échappement d'un moteur à combustion interne (11) selon la revendication 2, dans lequel
ladite soupape d'addition (41) est agencée à proximité d'un tuyau de refroidissement (45) prévu dans ledit moteur à combustion interne (11), et ladite unité de commande (61) utilise une température d'un liquide de refroidissement qui s'écoule à travers ledit tuyau de refroidissement (45) comme ladite valeur correspondante.

4. Appareil (12) de purification de gaz d'échappement d'un moteur à combustion interne (11) selon la revendication 1, dans lequel
ladite unité de commande (61) limite une quantité d'injection de carburant de ladite soupape d'injection de carburant(24), comme commande dudit paramètre.

5. Appareil (12) de purification de gaz d'échappement d'un moteur à combustion interne (11) selon la revendication 4, dans lequel
lorsqu'au moins l'une de ladite température de ladite soupape d'addition (41) et de ladite valeur correspondante est élevée, ladite unité de commande (61) limite ladite quantité d'injection de carburant davantage que lorsqu'au moins l'une de ladite température de ladite soupape d'addition (41) et de ladite valeur correspondante est basse.

6. Appareil (12) de purification de gaz d'échappement d'un moteur à combustion interne (11) selon la revendication 1, dans lequel
ladite unité de commande (61) diminue une quantité d'injection de carburant de ladite soupape d'injection de carburant(24), comme commande dudit paramètre.

7. Appareil (12) de purification de gaz d'échappement d'un moteur à combustion interne (11) selon la revendication 6, dans lequel
lorsqu'au moins l'une de ladite température de ladite soupape d'addition (41) et de ladite valeur correspondante est élevée, ladite unité de commande (61) diminue ladite quantité d'injection de carburant par une quantité plus importante que lorsqu'au moins l'une de ladite température dé ladite soupape d'addition (41) et de ladite valeur correspondante est basse.
